# EUROPEAN PATENT APPLICATION

(11) **EP 3 536 278 A1**
(43) Date of publication of application: **11.09.2019**
(21) Application number: 18382155.2
(22) Date of filing: 09.03.2018
(51) Int. Cl.: A61C 9/00, A61C 19/05, A61C 19/04

(54) **METHOD AND SYSTEM OF OCCLUSION FORCES MEASUREMENT AND ALIGNMENT**

(71) Applicant: Universidad del Pais Vasco - Euskal Herriko Unibertsitatea (UPV/EHU), 48940 Leioa (ES)
(72) Inventor: SOLABERRIETA MENDEZ, Eneko, 48940 Leioa (ES); DE PRADO ATXUTEGI, Iñigo, 48940 Leioa (ES)
(74) Representative: Balder IP Law, S.L.

(57) **Abstract**

Method and system which capture information for virtual deployment of occlusal forces by correlating (250) data from a force sensor (110) and a scanner (120). The force sensor (110) registers (210) a plurality of occlusal forces (310), whereas the scanner scans (220) at least a first digital cast (320) of the user's upper denture and a second digital cast (330) of the user's lower denture, while said denture is open. Additionally, the scanner (120) scans (230) a third digital record (340) at a position of maximum occlusion. The first first digital cast (320) and the second digital cast (330) are aligned through comparisions with the third digital record (340), determining a plurality of intercuspidation positions (380). The intercuspidation positions (380) and the occlusal forces (310) are correlated (250), determining positioning information (360) that enables projecting (260) the occlusal forces (310) onto an output digital cast (370).

## Description

### FIELD OF THE INVENTION

The present invention has its application within the sector of dental instruments, and especially, in the industrial area engaged in providing tools for retrieving dental occlusion information.

### BACKGROUND OF THE INVENTION

There is an increasing trend in the dental sector of diagnosis, planning and treatment based on the analysis of virtual representations of the patient's denture. In particular, the digitalization of occlusal contact information has focused a significant amount of attention in recent years, given the relevance of this information in diverse areas as prosthetics, esthetics, ferules, occlusal analysis and adjustment, temporal-mandible disorders and temporal-mandible articulations, to name a few.

Occlusal analysis is traditionally based on papers impregnated with waxes or oleaginous substance, which transfer its color to the regions where pressure from the teeth is applied. These papers, however, present a typical thickness between 40 and 200 microns which may result excessive for a detailed analysis in some cases. Alternatively, synthetic foils have been developed, which reduce the aforementioned thickness down to a range between 8 and 20 microns. In other approaches, such as shimstock papers, with a typical thickness of 8 microns, instead of transferring a colored substance to the teeth, the paper itself is adhered in those regions where contact between the upper and lower teeth takes place. In more complex solutions, a photo-plastic film is applied to the occlusal surface, before a sustained occlusion for a typical lapse between 10 and 20 seconds. Afterwards, the photo-plastic film is removed, and light is applied for occlusion analysis. Note that all these solutions only offer static information, that is, no time-resolved data of the occlusal process is provided.

Solutions based on pressure-sensitive plates are also known in the state of the art. Both the location and intensity of the occlusal forces is determined, the later showing a linear response between applied charges and resulting measurements. However, the the sensing plates used in this solution are typically too thick, resulting in heavier contacts in the posterior teeth than in the frontal ones. Furthermore, as in previous cases, contacts are only measured statically, with no information on temporal variations.

More recent solutions solve this limitation by providing time-resolved measurements, which are automatically digitalized by a force sensor, enabling subsequent analysis of both the position and the synchronization of the occlusal forces. For example, US 4,856,993 and EP 0,216,899 B1 disclose grid-based sensors with time-resolved measurement of occlusal forces. However, despite the advantages of direct digitalization and time-resolved measurement, these systems lack the precision of analogic solution. A single sensing element of the grid presents a typical size of 1 mm², significantly limiting the number and accuracy of the detected contacts. Furthermore, the pressure amount of each occlusal contact is only detected in relative terms, and not as an absolute value.

However, the most limiting aspect of digital force sensors is that the occlusal contact information is provided in a bidimensional representation, without references to associate the contact location to the user's actual denture, hence relying on the dentist personal ability to perform said association. That is, no alignment is provided between the occlusal forces and the arcades of the patient's denture. More recent versions of these tools provide three-dimensional digital casts of the user's denture, enabling to manually overlap the 2D occlusal contact information with the 3D digital cast. However, being a manual operation implies a lack of objective references that result in a variable accuracy depending on the expertise of the user.

In other examples, additional alternative approaches are disclosed by US 2012/0092679 A1, where occlusal analysis is performed by measuring light transmission through a layer of a polysiloxane; and US 2017/0265978 A1, which relies on capacitive sensors. However, regardless of the particular technology for detecting the position and temporal evolution of the occlusal forces, all these systems still fail to link the occlusion information to the actual topology of the user's denture. Therefore, there is still the need in the state of the art of a method and system which provide precise characterization of dental occlusion, while enabling referencing the occlusal forces to the actual denture of the user. Furthermore, it is desirable to achieve this goal without the need of adhering any foreign substance to the user's denture.

### SUMMARY OF THE INVENTION

The current invention solves all the aforementioned problems by disclosing a system and method which capture information for virtual deployment of occlusal forces, and project said occlusal forces onto automatically-aligned digital casts of the user's denture.

In a first aspect of the present invention, a system of dental occlusion measurement and virtual alignment is disclosed. The system comprises:
- A force sensor which registers a plurality of occlusal forces of a user's denture.
- An scanner which scans at least a first digital cast of the user's upper denture (i.e. maxillary arcade) and a second digital cast of the user's lower denture (i.e. mandibular arcade), when said user's denture is open. The scanner also scans a third digital record of the user's denture (i.e. a virtual occlusal record) which comprises teeth of both the maxillary arcade and the mandibular arcade at one or more vestibular areas, at a position of maximum intercuspidation. According to preferred embodiments of the invention, the scanner may either be an intra-oral scanner or an extra-oral scanner. Also, depending on the particular embodiments, digital casts may be either performed directly on the user's denture, or on physical casts of said denture.
- Data processing means which compute a relative position that aligns the first digital cast and the second digital cast. Said computation of the relative position is preferably implemented by firstly performing a best fit alignment between the first digital cast and the third digital record, and secondly performing a best fit alignment between the second digital cast and the third digital record, for two or more vestibular areas. In order to facilitate the computation of the relative positions, the data processing means are preferably configured to perform a manual pre-alignment, where at least three points are selected in each surfaces to be aligned, based on input introduced by a user to a visual interface. The selected points are matched in pairs, providing a first alignment estimation, which is then further refined by the automated algorithms.
After determining the relative position of the upper and lower digital casts in the moment of maximum intercuspidation, the processing means compute positioning information by correlating occlusal forces with intercuspidation positions of aligned first and second digital casts. Intercuspidation positions are preferably obtained by means of boolean volume subtraction operations. Finally, the data processing means generate a fourth digital cast (i.e. output digital cast) of the user's denture by projecting the occlusal forces onto the first digital cast and the second digital cast according to the computed positioning information over time.

In a second aspect of the present invention, a method of dental occlusion measurement and virtual alignment is disclosed. The method comprises:
i. Registering a plurality of occlusal forces by means of a force sensor.
ii. Scanning a first digital cast of the user's upper denture and a second digital cast of the user's lower denture. Preferably, this step may either be performed with an intra-oral scanner or an extra-oral scanner. Note that no visual marker (such as tinted paper) needs to be adhered to the user's denture during this step.
iii. Additionally, recording a third digital record of the user's denture at a position of maximum intercuspidation (i.e. a virtual occlusal record), which comprises teeth of both the maxillary arcade and the mandibular arcade at one or more vestibular areas.
iv. Computing a relative position which aligns the first digital cast and the second digital cast, that is, determining a relative position between the first digital cast and the second digital cast that emulates the estate of the user's denture during maximum occlusion. This step is preferably performed by firstly performing a best fit alignment between the first digital cast and the third digital record, and secondly performing a best fit alignment between the second digital cast and the third digital record. More preferably, the best fit alignments between the first digital cast, the second digital cast and the third digital record are repeated for a plurality of vestibular regions of the user's denture. Furthermore, in order to facilitate the computation of the relative positions, the data processing means are preferably configured to perform a manual pre-alignment, where at least three points are selected in each surfaces to be aligned, providing a first alignment estimation, which is then further refined by the automated algorithms.
v. Computing positioning information that aligns the information provided by the force sensor and the scanner, by correlating the plurality of occlusal forces with intercuspidation positions. Intercuspidation positions are preferably obtained by means of boolean volume subtraction operations, after applying the computed relative position to the first digital cast and the second digital cast.
vi. Generating a fourth digital cast of the user's denture by projecting the occlusal forces onto the first digital cast and the second digital cast according to the computed positioning information over time.

In a third aspect of the present invention, a computer program is disclosed which implements the method of the invention. The computer program comprises computer program code means adapted to perform any embodiment of the method of the invention when run on a computer, a digital signal processor, a field-programmable gate array, an application-specific integrated circuit, a micro-processor, a micro-controller, or any other form of programmable hardware.

The system, method and computer program of the invention provide efficient and accurate projection of occlusal contact information onto a personalized digital cast of the user. This projection enables a more precise location and analysis of the occlusal contact information and forces, as well as observation of the time evolution of said occlusal forces. Furthermore, no foreign substance is adhered to the user's denture during the alignment process. Additional advantages and features of the invention will become apparent from the detailed description that follows and will be particularly pointed out in the appended claims.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 shows the main elements of the system of the invention, according to a particular embodiment thereof.
Figure 2 presents the main step of the method of the invention, according to a particular embodiment thereof.
Figure 3 illustrates the step of registering the occlusal forces with a force sensor, according to particular embodiments of the method and system of the invention.
Figure 4 exemplifies a visual representation of the registered occlusal forces, according to particular embodiments of the method and system of the invention.
Figure 5 illustrates the step of scanning the first digital cast and second digital cast of the user's upper and lower denture with a scanner, according to particular embodiments thereof.
Figure 6 presents an example of a first digital cast and second digital cast of the user's upper and lower denture.
Figure 7 illustrates the step of scanning the third digital record of the user's denture at maximum cuspidation, according to particular embodiments of the method and system of the invention.
Figure 8 presents an example of a third digital record of the user's denture at maximum cuspidation.
Figure 9 illustrates the step of aligning the first digital cast and second digital cast of the user's upper and lower denture, according to particular embodiments of the method and system of the invention.
Figure 10 presents an example of the positions of maximum intercuspidation resulting from the alignment of the first digital cast and second digital cast through boolean volume subtraction.
Figure 11 illustrates the step of correlating the occlusal contact information with the positions of maximum intercuspidation, according to particular embodiments of the method and system of the invention.
Figure 12 presents an example of the resulting fourth digital cast with projected occlusal forces over time.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope of the invention. In particular, note that any particular embodiment or feature of the device of the invention may be applied to the method of the invention and vice versa. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

Also, note that the system and method of the invention do not provide any diagnosis, planning and treatment of the human body, nor requires to be operated by medical staff. Instead, the invention merely provides the tools for measuring and virtually deploying dental occlusion information. Any use that may be given to the measured information for diagnostics purposes falls outside the scope of the current invention.

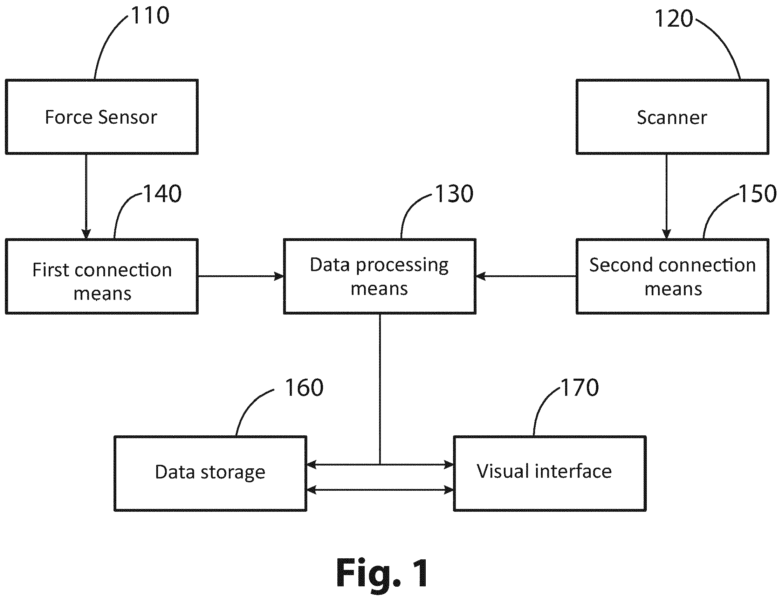

Figure 1 presents a schematic representation of the main elements of the system of the invention, according to a preferred embodiment thereof. The system comprises two sources of information for characterizing the user's occlusion dynamics, namely a force sensor (110) and a scanner (120). The scanner (120) is preferably an intra-oral 3D scanner (120), although an extra-oral 3D scanner (120) can alternatively be used, for example by performing any arcade scan from plaster molds of the user's denture

The inputs of both sources are processed and correlated at data processing means (130), connected to the force sensor (110) and the scanner (120) through first connection means (140) and second connection means (150), respectively. The data processing means (130) may be implemented in a computer, a digital signal processor, a field-programmable gate array, an application-specific integrated circuit, a micro-processor, a micro-controller, or any other form of programmable hardware. The first connection means (140) and second connection means (150) may be implemented through any wired or wireless technology known in the state of the art.

The system further comprises data storage means (160) and a visual interface (170) connected to the data processing means (130). The data storage means (160) may store any intermediate and/or final result of the computations performed by the data processing means (130). The visual interface (170) displays said intermediate and/or final results, and may additionally include any means of user input.

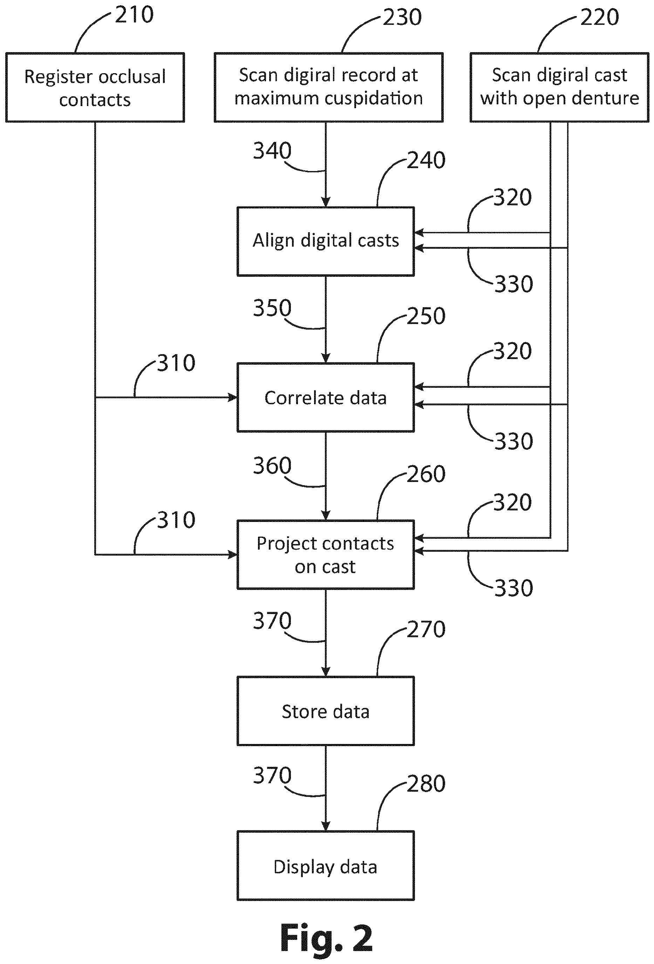

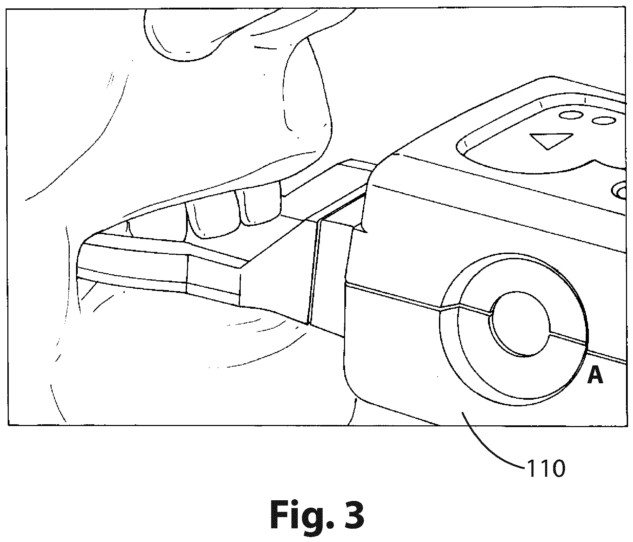

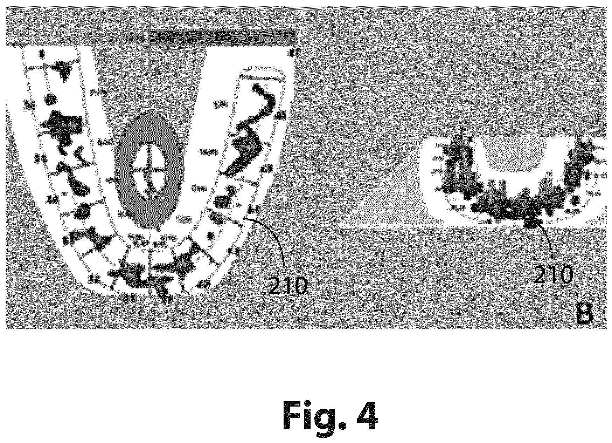

Figure 2 shows a schematic representation of the steps performed by the method, computer of the invention, according to preferred embodiments thereof. First, occlusal forces (310) are registered (210) by the force sensor (110). Registered data is transferred to the processing means (130) through the first connection means (140). Said registered data of the occlusal forces (310) comprises time-resolved information of the pressure induced by the user's denture, at each bi-dimensional position measured by the force sensor (110). The step of registering (210) occlusal forces (310) is illustrated in figure 3, whereas an example of the resulting occlusal forces (310) information is shown in figure 4.

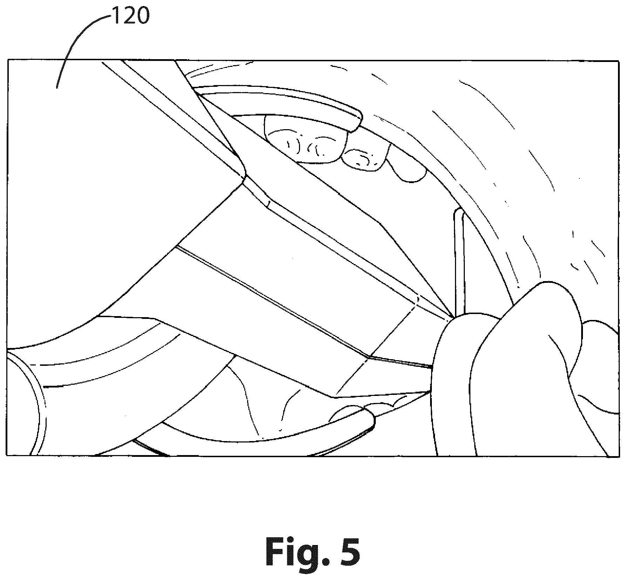

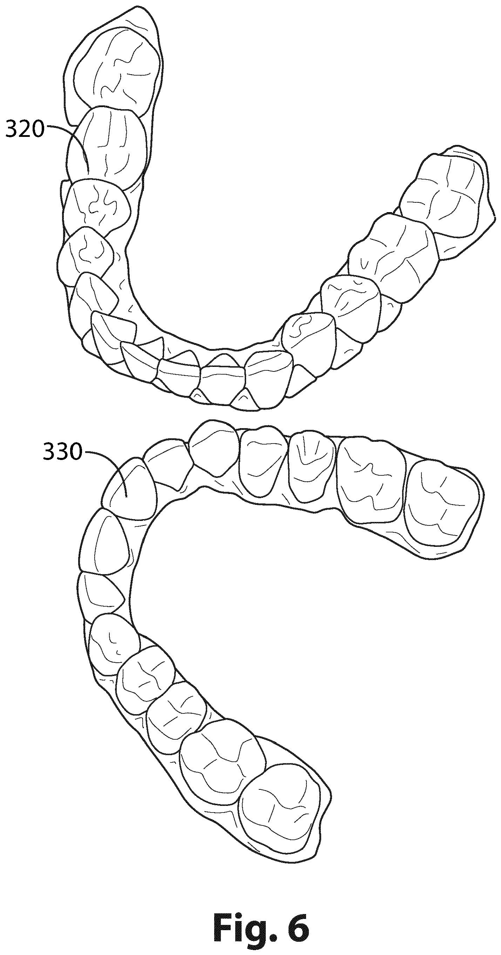

Secondly, a first digital cast (320) and a second digital cast (330) is scanned (220) by the scanner (120). The first digital cast (320) comprises three-dimensional information of the user's upper denture, whereas the second digital cast (330) comprises three-dimensional information of the user's lower denture. Scanned data is transferred to the processing means (130) through the second connection means (150). The step of scanning (220) the first digital cast (320) and the second digital cast (330) is illustrated in figure 5, whereas an example of said first digital cast (320) and second digital cast (330) is shown in figure 6.

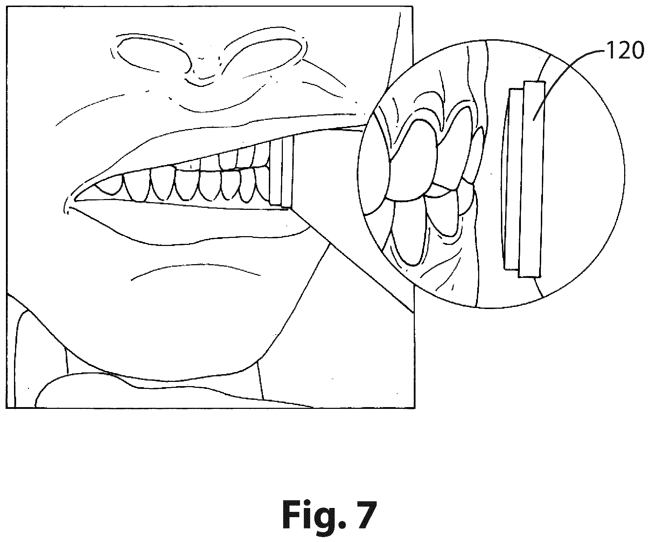

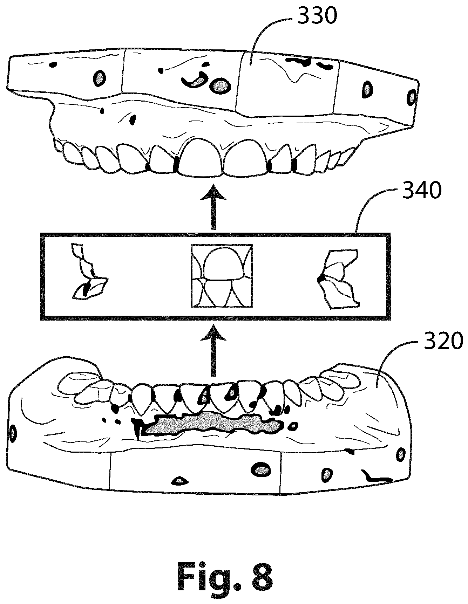

Preferably, an additional static third digital record (340) of the user's denture at a position of maximum intercuspidation is also recorded (230). This third digital record (340) comprises images of two or more vestibular areas that enable to emulate the relative position of the first digital cast (320) and the second digital cast (330), scanned with open denture, in a position of maximum intercuspidation. This process is illustrated in figure 7, whereas an example of the third digital record (340) is shown in figure 8.

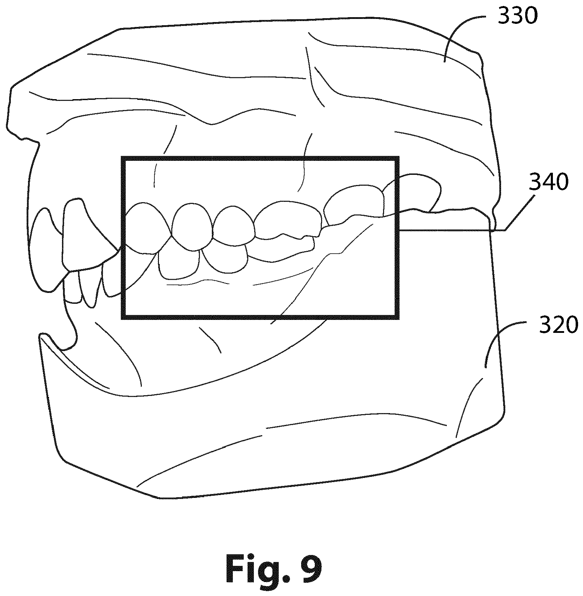

Then, the first digital cast (320) and the second digital cast (330) are automatically aligned (240) in order to emulate the position of the user's denture during occlusion. Firstly, a best fit alignment between the first digital cast (320) and the third digital record (340) is performed. Then, a best fit alignment between the second digital cast (330) and the third digital record (340) is performed. That is, in each best fit alignment, the part of the upper and lower denture displayed in the third digital record (340) is used to determine the position of the whole first digital cast (320) and second digital cast (330) The information of both fits is combined to determine the relative position (350) between the first digital cast (320) and the second digital cast (330) during occlusion. This process may be repeated using information of multiple vestibular areas of the user's denture, further applying an optimization algorithm such as minimum mean square error (MMSE) to determine the optimal relative position (350). Furthermore, this process may further comprise a manual pre-alignment, where the user establishes which positions should be matched, for example, by clicking through a pointer. The result of this pre-alignment is then used as a first approximation for ulterior automated refining. The alignment process is illustrated in figure 9.

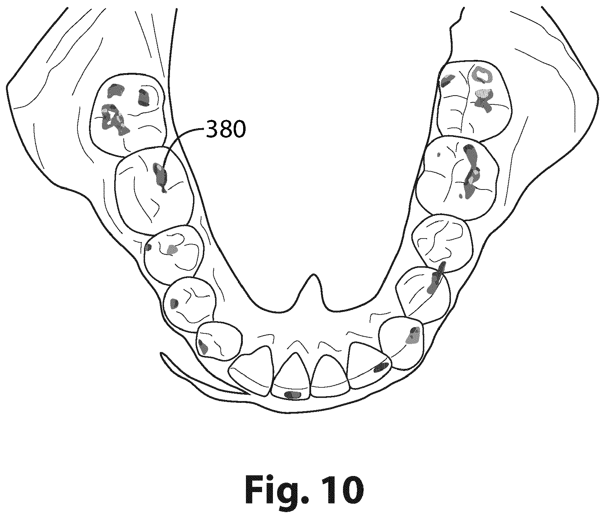

Intercuspidation positions (380) are computed through boolean volume subtraction operations applied to the first digital cast (320) and the second digital cast (330) after alignment. An example of intercuspidation positions (380) is shown in figure 10. Note that small alignment errors may result in a null area from the boolean volume subtraction. In that case, an offset is preferably applied to the first digital cast (320) or the second digital cast (330), until a plurality of intercuspidation positions (380) are detected.

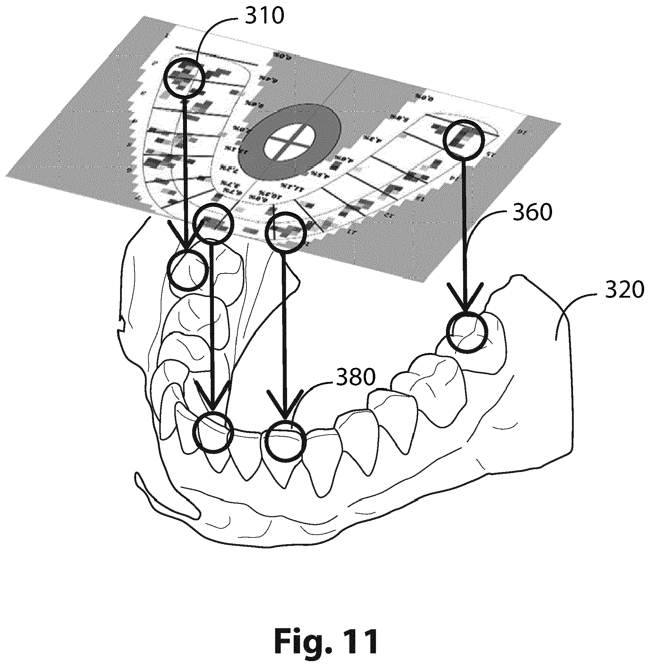

After alignment, data from the force sensor (110) and the scanner (120) is correlated (250), as illustrated by figure 11. That is, the processing means (130) compute positioning information (360) that associates intercuspidation positions (380) of the first digital cast (320) and the second digital cast (330) with the occlusal forces (310) registered by the force sensor (110). Data correlation (250) may be either performed manually, using positioning input from the user received through the visual interface (170), and/or automatically, through algorithms integrated in the processing means (130). That is, in case of manual data correlation (250), the user indicates which positions need to be correlated, for example, by clicking through a pointer in multiple intercuspidation positions (380) of the first digital cast (320) or the second digital cast (330), as well as in the same number of points of the 2D image positions of the occlusal forces (310) registered by the force sensor (110). An example of said 2D image can be found in the projection orientation of figure 11. This aforementioned manual data correlation (250) can be also used as a first approximation for ulterior automated refining. Preferably, at least three positions are correlated (250). These three positions define a 2D plane within the 3D cast structure where the bidimensional occlusal force (310) information is projected. In case more than three positions are used, MMSE or other alternative optimization algorithms may be employed.

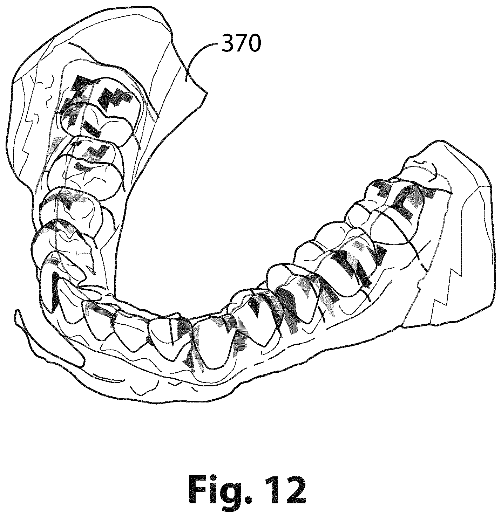

A fourth digital cast (370) is generated by applying the positioning information (360) to project (260) the occlusal forces (310) onto the first digital cast (320) and the second digital cast (330), as shown in figure 12. The occlusal forces (310) comprise time-resolved force information, which is preferably displayed through time-varying color-coded projection. Note that color and texture characteristics of the first digital cast (320) and the second digital cast (330) may be removed before projecting (260) the occlusal forces (310).

This fourth digital cast (370) is then stored (270) at the data storage means (160) and displayed (280) for posterior analysis through the visual interface (170).

## Claims

1. System of occlusion forces measurement and alignment comprising:
- a force sensor (110) adapted to register (210) a plurality of occlusal forces (310) of a user's denture;
**characterized in that** the system further comprises:
- an scanner (120) configured to scan (220) at least a first digital cast (320) of the user's upper denture, a second digital cast (330) of the user's lower denture, and a third digital record (340) of the user's external denture at a position of maximum intercuspidation; and
- data processing means (130) configured to:
- compute a relative position (350) which aligns (240) the first digital cast (320) and the second digital cast (330), through comparison with the third digital record (340);
- compute positioning information (360) by correlating (250) the plurality of occlusal forces (310) with intercuspidation positions (380) of the first digital cast (320) and the second digital cast (330) aligned according to the computed relative position (350); and
- generate a fourth digital cast (370) of the user's denture by projecting (260) the occlusal forces (310) onto the first digital cast (320) and the second digital cast (330) according to the computed positioning information (360).

2. System according to claim 1 **characterized in that** the scanner (120) is an intra-oral scanner (120).

3. System according to claim 1 **characterized in that** the scanner (120) is an extra-oral scanner (120).

4. System according to any of the previous claims **characterized in that** the processing means (130) are further configured to compute the relative position (350) by firstly performing a best fit alignment between the first digital cast (320) and the third digital record (340) in at least two vestibular areas, and secondly performing a best fit alignment between the second digital cast (330) and the third digital record (340) in at least two vestibular areas.

5. System according to claim 4 **characterized in that** the processing means (130) are further configured to determine intercuspidation positions (380) of the first digital cast (320) and the second digital cast (330) through a boolean volume subtraction operation.

6. Method of occlusion forces measurement and alignment comprising:
- registering (210) a plurality of occlusal forces (310) of a user's denture;
**characterized in that** the method further comprises:
- scanning (220) at least a first digital cast (320) of the user's upper denture and a second digital cast (330) of the user's lower denture;
- recording (230) a third digital record (340) of the user's external denture at a position of maximum intercuspidation;
- computing a relative position (350) which aligns (240) the first digital cast (320) and the second digital cast (330), through comparison with the third digital record (340);
- computing positioning information (360) by correlating (250) the plurality of occlusal forces (310) with intercuspidation positions (380) of the first digital cast (320) and the second digital cast (330) aligned according to the computed relative position (350); and
- generating a fourth digital cast (370) of the user's denture by projecting (260) the occlusal forces (310) onto the first digital cast (320) and the second digital cast (330) according to the computed positioning information (340).

7. Method according to claim 6 **characterized in that** the step of scanning (220) at least a first digital cast (320) of the user's upper denture and a second digital cast (330) of the user's lower denture is performed with an intra-oral scanner.

8. Method according to claim 6 **characterized in that** the step of scanning (220) at least a first digital cast (320) of the user's upper denture and a second digital cast (330) of the user's lower denture is performed with an extra-oral scanner.

9. Method according to claims 6 to 8 **characterized in that** the step of computing the relative position (350) further comprises firstly performing a best fit alignment between the first digital cast (320) and the third digital record (340) in at least two vestibular areas, and secondly performing a best fit alignment between the second digital cast (330) and the third digital record (340) in at least two vestibular areas.

10. Method according to claim 9 **characterized in that** the method further comprises determining intercuspidation positions (380) of the first digital cast (320) and the second digital cast (330) through a boolean volume subtraction operation.

11. Computer program comprising computer program code means adapted to perform the steps of the method according to any of claims 6 to 10 when said program is run on a computer, a digital signal processor, a field-programmable gate array, an application-specific integrated circuit, a micro-processor, a micro-controller, or any other form of programmable hardware.
